# EUROPEAN PATENT SPECIFICATION

(11) **EP 2 949 246 B1**
(45) Date of publication and mention of the grant of the patent: **13.09.2017**
(21) Application number: 15169342.1
(22) Date of filing: 27.05.2015
(51) Int. Cl.: A47J 37/07

(54) **IMPROVED BARBECUE**
VERBESSERTER GRILL
BARBECUE AMÉLIORÉ

(30) Priority: 29.05.2014 IT MC20140047
(43) Date of publication of application: 02.12.2015
(73) Proprietor: Bonacci, Giovanni, 62010 Montefano (MC) (IT)
(72) Inventor: Bonacci, Giovanni, 62010 Montefano (MC) (IT)
(74) Representative: Baldi, Claudio

(56) References cited:
- US-A- 1 903 324
- US-A- 2 124 837
- US-A- 3 052 177
- US-A- 4 627 410
- US-A- 5 836 295
- US-A1- 2013 055 906

## Description

The present patent application for industrial invention relates to an improved barbecue.

The present invention falls within the field of food cooking devices, and in particular devices that provide for using grills whereon the food to be cooked is placed.

Food can be grilled in two ways, i.e. "by contact" and "by irradiation".

In case of contact grilling, the cooking devices comprise very hot plates that are heated electrically or with charcoal/wood, and the food adheres to the said plates completely. More precisely, the food is placed on the said plates or grills, which act as cooking surfaces.

Instead, in case of irradiation grilling, the structure of the devices allows for cooking the food without a direct contact between the food and the heat source.

This is the case of traditional barbecues, in which the heat source is positioned under a grill that supports the food to be cooked; in other words, barbecues are provided with a lower surface, which comprises the heat source, and a grill, which is disposed at a distance of approximately 10-15 cm above the said lower surface.

The barbecue is a cooking apparatus that provides for cooking the food by irradiation by means of the heat emitted by a fuel, which can be wood, charcoal or gas, such as propane.

Regardless of the type of heat source used, barbecues are impaired by some drawbacks caused by the fact that, when it is burned, fat starts dripping on the heat source; it must be noted that the fat drops deposited on the heat source generate toxic fumes.

In addition to being hazardous when inhaled, the said toxic fumes reach the food that is being cooked, changing its characteristics and safety.

Moreover, it must be noted that, according to the type of heat source used, the said dripping can also generate flames that inevitably reach the food that is being cooked.

The volume of a barbecue depends on the cooking area that coincides with the surface offered by the grill to support the food to be cooked; in other words, the volume of a barbecue cannot be lower than the said cooking area.

Consequently, the larger the cooking area, the bigger the volume of the barbecue will be.

Moreover, with reference to the constraints related with the structure of similar barbecues, it must be noted that the cooking area is not used completely, given the fact that only the upper side is used to cook the food placed on the grill by irradiation.

In view of the above, special barbecues provide for using a cooking surface disposed in lower position with respect to the cooking area; in such a type of barbecues, the cooking area is doubled, although the lower cooking surface has a significantly lower cooking performance compared to the upper cooking area.

In other words, if the same food is placed on and under the grill, the food preparation time is different and it is impossible to complete the cooking process of all foods simultaneously.

US5836295 discloses a cooking apparatus comprising a receptacle with a cavity that houses a grill and two pockets disposed inside the cavity to be loaded with fuel. The pockets are defined by fixed screens, therefore a correct heat propagation through the screens is not obtained and the cooking apparatus cannot be configured according to the user's needs, removing the pockets. Moreover, such a cooking apparatus comprises a rack and support means for the said rack that are disposed inside the receptacle and are of plug-bolt type.

US2013055906 discloses a cooking apparatus comprising a cylindrical container that comprises a sidewall and two doors obtained on the sidewall to access the pockets that are loaded with fuel. The pockets are permanently obtained on the doors and overlapped. Moreover, the cooking apparatus comprises a plurality of grills disposed horizontally, one on top of the other, inside a cooking chamber.

US4627410 discloses a cooking oven comprising a cooking chamber without pockets for fuel. In particular, the cooking oven comprises a roasting spit.

US1903324 discloses an electric broiler, comprising a frame, a grill and support means for the said grill that keep the grill in suspended position inside the broiler, in such manner that no portion of the grill is in contact with the frame of the broiler.

US3052177 discloses a broiler comprising an internally hollow receptacle and a grill supported within the receptacle by a hook connected to the grill by welding and coupled to an upper bar of the receptacle.

US2124837 discloses a broiler comprising a casing and a grid placed inside the casing. The grid is provided with an hook plugged into a slot obtained in a flange disposed on a rear wall of the casing of the broiler. The flange is fixed to the rear wall of the casing of the broiler by fixing means such as welding.

The purpose of the present invention is to eliminate the drawbacks of the prior art by devising a barbecue that:
- provides for efficient food cooking;
- prevents fat dripping coming from the food that is being cooked from falling onto the heat source;
- is provided with innovative support means for the grill in vertical position. The said innovative support means:
- are not composed of elements attached and fixed to the barbecue frame;
- are especially reliable over time, because their main function, which consists in correctly supporting the grill in vertical position inside the barbecue, is not impaired with the use of the barbecue;
- offer a stable support for the grill, regardless of the weight of the grill in full load condition;
- are inexpensive to produce in spite of very high practicalness, simplicity and easy use;
- do not require any maintenance or replacement.

Another purpose of the present invention is to devise an improved barbecue that, in spite of having a simple configuration and being inexpensive, is made of portions that are easy and rapid to assemble/disassemble/replace without using any tools, so that the user can easily and rapidly assemble/disassemble/replace all the barbecue parts, which can be cleaned thoroughly after using the barbecue.

An additional purpose of the present invention is to devise an improved barbecue capable of using both sides of the cooking area.

The barbecue of the invention comprises:
- an internally hollow receptacle, which is provided with at least one sidewall, a cavity laterally defined by the said sidewall, and an upper edge that defines an upper opening providing access to the said cavity; the said sidewall of the receptacle comprising an internal surface facing towards the said cavity, and an external surface facing outwards;
- at least one "L"-shaped frame disposed in the receptacle, inside the said cavity and defining a pocket intended to be loaded with fuel;
- an openable grill comprising a handle and a border in opposite position to the said handle;
- support means for the said grill; the said support means being provided on the said receptacle and supporting the grill inside the cavity in vertical position in proximity to the said at least one pocket;

In particular, the said support means for the grill comprise:
- a notch obtained on the sidewall of the receptacle and ending on the upper opening of the receptacle; the said notch comprising a horizontal bottom edge whereon the handle of the grill is supported;
- a portion of the internal surface of the sidewall of the receptacle; the said portion being disposed in diametrically opposite position with respect to the notch; the said border of the grill, in opposite position with respect to the handle, being engaged against the said portion of the internal surface of the sidewall of the receptacle, wherein said portion of the internal surface of the side-wall of the receptacle being an integral part of the internal surface of the side-wall of the receptacle

For purpose of clarity the description of the barbecue according to the present invention continues with reference to the attached drawings, which are intended for purposes of illustration only, and not in a limiting sense, wherein:
- Fig. 1 is an axonometric view of the barbecue according to the present invention.
- Fig. 2 is an axonometric detailed view of an "L"-shaped frame that defines one of the two pockets of the barbecue according to the invention, which are intended to be loaded with fuel;
- Fig. 3 is a view of the barbecue of Fig. 1 sectioned along a vertical plane passing through the "L"-shaped frames inserted in the cavity of the receptacle;
- Fig. 3a is a diagrammatic side view of the barbecue of the invention, sectioned with a vertical plane passing through the grill;
- Fig. 4 is an axonometric view of the barbecue of the invention, wherein the two "L"-shaped frames are fabricated according to a second preferred embodiment;
- Fig. 5 is an axonometric exploded view of one of the two "L"-shaped frames of the barbecue of Fig. 4;
- Fig. 6 is a side view of the "L"-shaped frame of Fig. 5 in operating position and mounted inside the barbecue of Fig. 4;
- Fig. 7 is an axonometric view of a second embodiment of the receptacle of the barbecue according to the invention;
- Fig. 8 is an axonometric view of the receptacle of Fig. 7, in an initial condition.

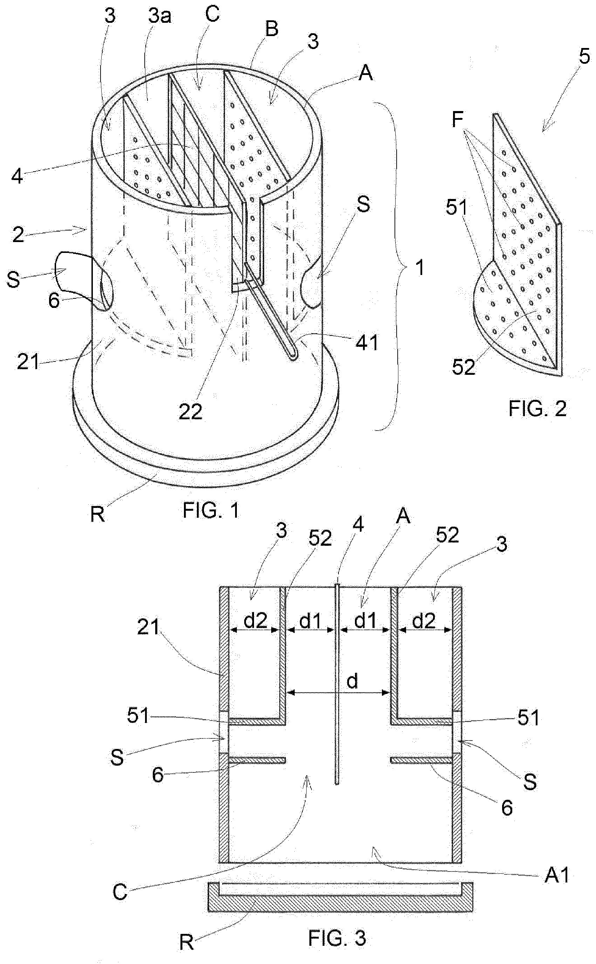

Referring to Figs. 1 and 2, the barbecue of the invention is disclosed, which is generally indicated with reference numeral (1).

The barbecue (1) comprises an advantageously cylindrical receptacle (2), which comprises a sidewall (21) and a cavity (C) laterally defined by the said sidewall (21).

The sidewall (21) of the receptacle (2) comprises an internal surface (21a) facing towards the said cavity (C), and an external surface (21b) facing outwards.

The receptacle (2) comprises an upper edge (B) that defines an upper opening (A) that provides access to the said cavity (C).

Advantageously, the said receptacle (2) has a thickness comprised between 3 mm and 6 mm.

The barbecue (1) of the invention also comprises:
- an openable grill (4) comprising a handle (41) and a border (42) in opposite position with respect to the handle (41);
- two "L"-shaped frames (50) that define two identical pockets (3) in specular opposite position, each of them being disposed in the receptacle (2), inside the cavity (C), and intended to be loaded with fuel, such as charcoal, wood or propane, or a heating element, such as an electrical resistance;
- support means (22, 21c) for the said grill (4) provided on the said receptacle (2) to support the grill (4) inside the cavity (C) in vertical position in proximity to the said two pockets (3).

A lid can be provided to close the pockets (3) in order to prevent the user from getting burned with the fuel or the heating element.

More precisely, the said two "L"-shaped frames (50) are diametrically opposite and define a space (3a) inside which the grill (4) is disposed.

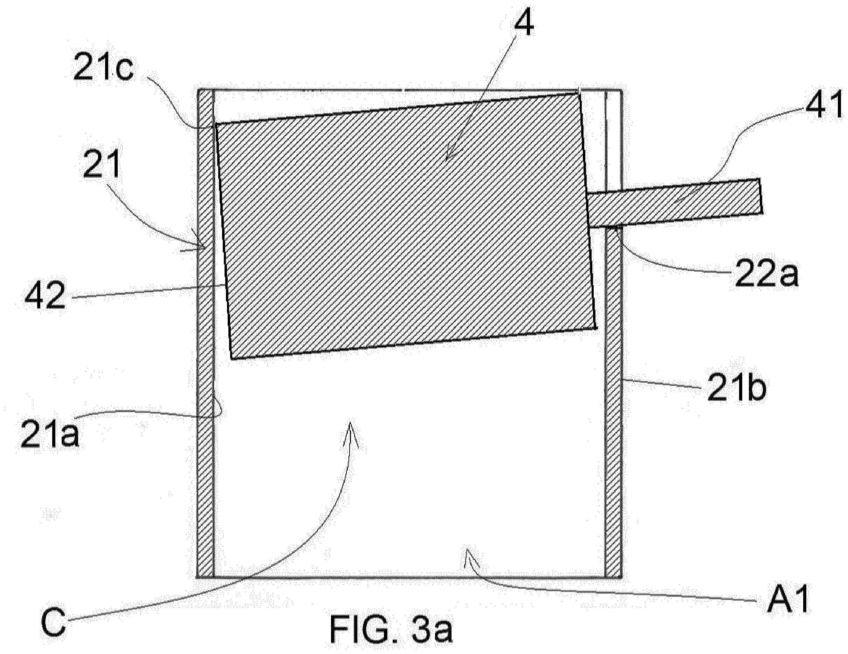

With reference to Fig. 3a, the said supporting means (22, 21c) for the grill (4) advantageously comprise a notch (22) obtained on the sidewall (21) of the receptacle (2), and ending in the upper opening (A) of the receptacle (2) in order to receive the handle (41) of the said grill (4).

In particular, the said notch (22) comprises a horizontal bottom edge (22a) whereon the handle (41) of the grill (4) is supported.

The said support means (22, 21c) also comprise a portion (21c) of the internal surface (21a) of the sidewall (21) of the receptacle (2).

In particular, the said portion (21c) of the internal surface (21a) of the sidewall (21) of the receptacle (2) is diametrically opposite to the notch (22) and the border (42) of the grill (4) opposite to the handle (41) is engaged against the said portion (21c).

With reference to Fig. 2, each "L"-shaped frame (50) of the barbecue (1) according to the invention is made of a perforated "L"-bent metal sheet (5) that comprises a perforated base wall (510) disposed in horizontal position to support the fuel loaded in the pocket (3) and a sidewall (520) in vertical position, which is provided with a plurality of holes (F) for transmitting the heat from the pocket (3) to the space (3a).

It must be noted that the sidewalls (520) of the two "L"-shaped frames (50) are disposed at a variable mutual distance (d) according to the empty-full percent ratio of the sidewall (520) of each "L"-shaped frame (50).

More precisely, when the sidewall (520) of each "L"-shaped frame (50) has an empty-full percent ratio comprised between 30% and 50%, each pocket (3) has a width (d2) equal to 1/3 of the diameter of the receptacle (2) and the distance (d) between the sidewalls (520) of the two "L"-frames (50) is 1/3 of the diameter of the receptacle (2).

Consequently, the sidewall (520) of each "L"-shaped frame (50) is disposed at a minimum distance (d1) from the grill (4) equal to 1/6 of the diameter of the receptacle (2).

Instead, when the sidewall (520) of each "L"-shaped frame (50) has an empty-full percent ratio comprised between 50% and 70%, each pocket (3) has a width (d2) equal to 1/4 of the diameter of the receptacle (2) and the distance (d) between the sidewalls (520) of the two "L"-frames (50) is 1/2 of the diameter of the receptacle (2).

Consequently, the sidewall (520) of each "L"-shaped frame (50) is disposed at a minimum distance (d1) from the grill (4) equal to 1/4 of the diameter of the receptacle (2).

When the base wall (510) of each "L"-shaped frame (50) is excessively perforated, a perforated plate can be inserted in the pocket (3) in such manner that it is disposed above the said base wall (510), reducing the passage of air through the holes of the base wall (510); in other words, the said perforated plate prevents the charcoal from burning too rapidly and the ash from falling excessively under the base wall (510) of the "L"-shaped frame (50).

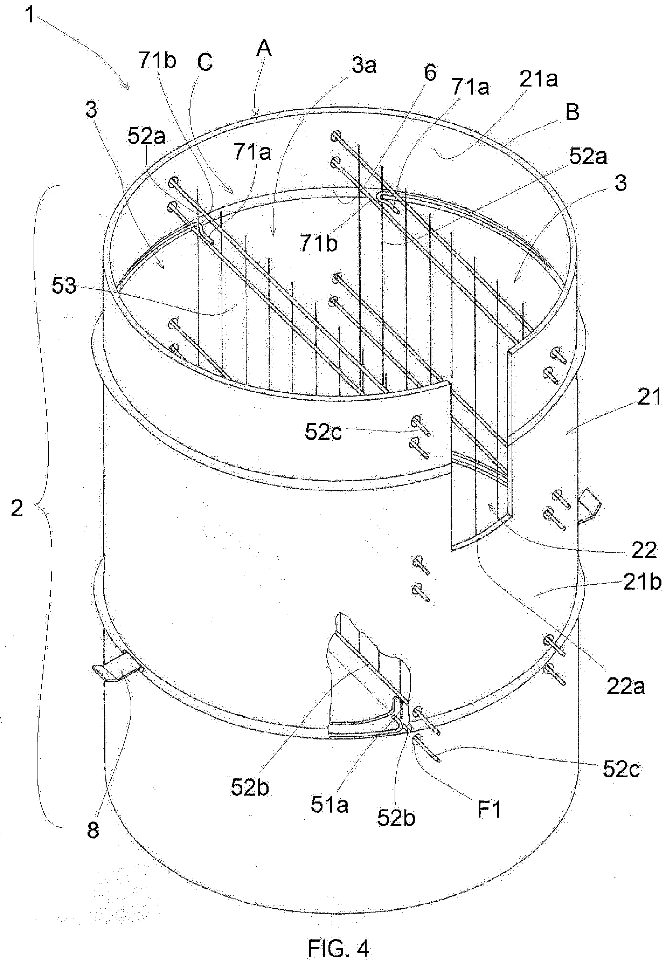

According to a preferred embodiment of the invention, which is shown in detail in Figs. 4 to 6, the barbecue (1) of the invention comprises two "L"-shaped frames (5) with a mountable/dismountable structure in such manner that each "L"-shaped frame (5) can be easily and rapidly dismounted, cleaned, mounted again or replaced as necessary.

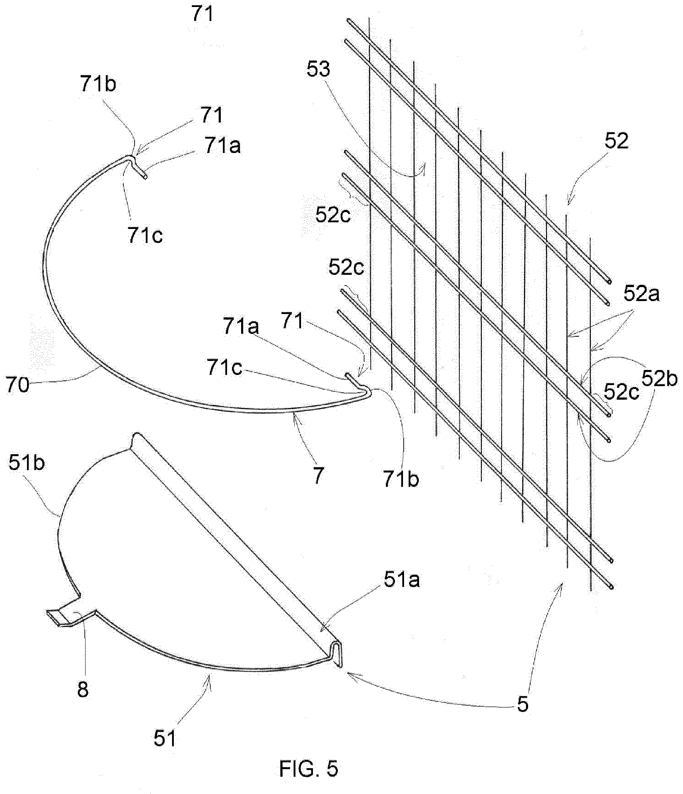

With special reference to Fig. 5, every "L"-shaped frame (5) of the barbecue (1) according to the invention comprises a base wall (51) disposed in horizontal position to support the fuel loaded in the pocket (3) and a sidewall (52) disposed in vertical position inside the cavity (C) of the receptacle (2).

The base wall (51) and the sidewall (52) of each "L"-shaped frame (5) are removably connected to the receptacle (2) in such manner to be easily and rapidly connected to the receptacle (2) or removed from the cavity (C) of the receptacle (2) according to the user's needs.

With special reference to Figs. 4 and 5, the sidewall (52) of each "L"-shaped frame (5) comprises a series of vertical rods (52a) and a series of horizontal rods (52b) that connect the said vertical rods (52a) mutually in such manner to define openings (53) for transmitting heat from the pocket (3) towards the space (3a).

Each horizontal rod (52b) is provided with two free ends (52c) inserted in holes (F1) obtained on the sidewall (21) of the receptacle (2), as shown in Fig. 1.

The base wall (51) of each "L"-shaped frame (5) is made of a plate shaped as a disk-portion and provided with a curvilinear edge (51b) and a rectilinear edge (51a); the said curvilinear edge (51b) being in contact with the internal surface (21a) of the sidewall (21) of the receptacle (2) and the said rectilinear edge (51a) being stopped against the sidewall (52) of the "L"-shaped frame (5).

The rectilinear edge (51a) of the base wall (51) of each "L"-shaped frame (5) is bent as an overturned "U" with down-facing concavity, and is interposed between two side-by-side horizontal rods (52b) of the sidewall (52) of the "L"-shaped frame (5).

With special reference to Figs. 4 and 5, the barbecue (1) of the invention comprises support means (7) to support the sidewall (52) of each "L"-shaped frame (5).

The support means (7) advantageously comprise springs (7) bent as a semicircle. Each spring (7) comprises a semicircular central section (70) and two ending sections (71) in opposite facing position.

Each ending section (71) of each spring (7) advantageously comprises a rectilinear portion (71a) and a U-shaped curvilinear portion (71b) that defines a housing (71c). Although the figures show four springs (7), i.e. two upper springs and two lower springs, the lower springs can be provided with rectilinear ending sections (71) such as the ones of Fig. 3.

More precisely, the semicircular central section (70) of each spring (7) is engaged against the internal surface (21a) of the sidewall (21) of the receptacle (2) and the two ending sections (71) of each spring (7) are stopped against the sidewall (52) of the "L"-shaped frame (5) in such manner to push the said sidewall (52) of the "L"-shaped frame (5) towards the interior of the receptacle (2).

In particular, one of the vertical rods (52a) of the sidewall (52) of each "L"-shaped frame (5) is inserted in the housing (71c) defined by the curvilinear portion (71b) of the ending section (71) of the spring (7). In such a way, the curvilinear portion (71b) of the ending section (71) of the spring (7) is attached to one of the vertical rods (52a) of the sidewall (52) of the "L"-shaped frame (5), acting as stop for the movement of the sidewall (52) of the "L"-shaped frame (5) towards the interior of the receptacle (2).

Advantageously, the receptacle (2) of the barbecue (1) comprises housings (6) that house the semicircular central sections (70) of the springs (4).

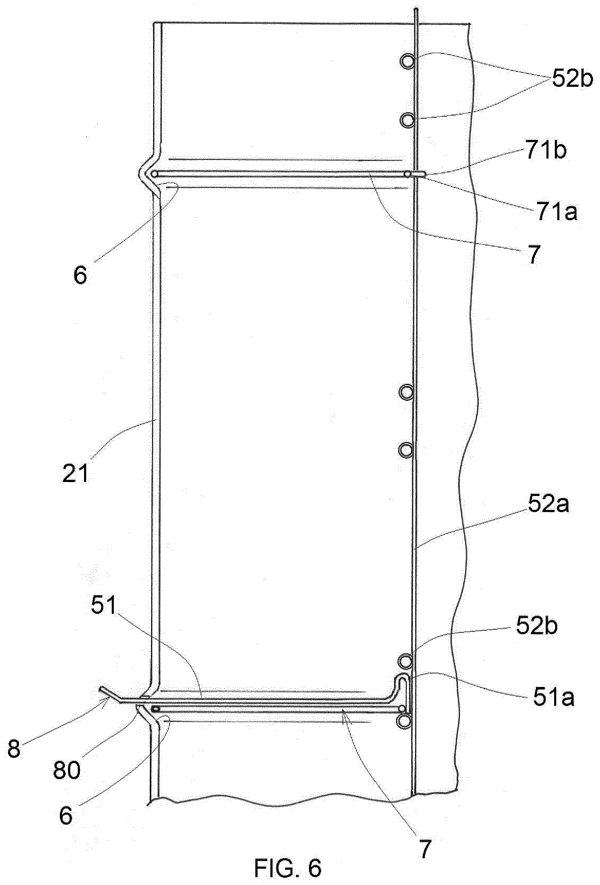

In particular, the housings (6) comprise perimeter grooves (6) obtained on the internal surface (21a) of the sidewall (21) of the receptacle (2), as shown in Figs. 4 and 6.

With special reference to Figs. 4 and 6, the base wall (51) of each "L"-shaped frame (5) advantageously comprises a tab (8) inserted in a slot (80) obtained on the sidewall (21) of the receptacle (2) in one of the perimeter grooves (6).

The provision of the said tabs (8) guarantees the stable connection of the base walls (51) of the two "L"-shaped frames (5) with the receptacle (2) and a correct positioning of the said two base walls (51) inside the cavity (C) of the receptacle (2).

With special reference to Fig. 3, the receptacle (2) of the barbecue (1) according to the present invention can also be provided with a lower opening (A1).

In such a case, the barbecue (1) comprises a collection receptacle (R), full of water, which is disposed in the said lower opening (A1) of the receptacle (2) and is intended to collect the drops of fat coming from the food cooked on the grill (4).

Obviously, the said receptacle is also intended to collect the soot that comes out of the pockets where charcoal or wood is burned.

According to a preferred embodiment, the barbecue (1) of the invention comprises at least three support legs on which it stands from the ground; each leg is removably fixed to the receptacle with screws and wing nuts for assembling and disassembling the legs easily and rapidly.

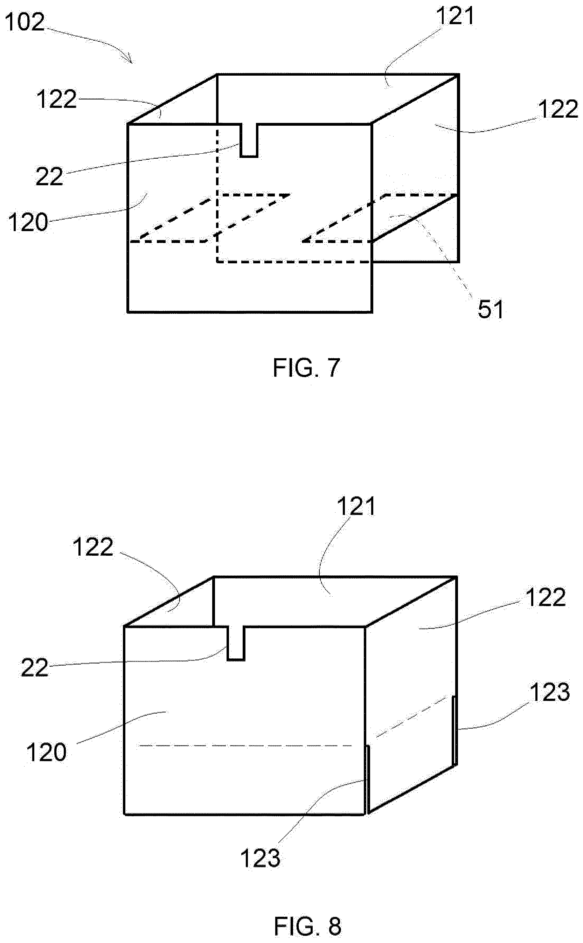

Fig. 7 shows a second embodiment of a receptacle (102) provided with a parallelepiped shape, with a front wall (120) provided with the notch (22), a back wall (121) and two opposite sidewalls (122).

Referring to Fig. 8, vertical notches (123) are obtained in the opposite sidewalls (122), in such manner that a lower portion of each sidewall (122) is bent inwards.

In view of the above, the lower portion of each sidewall (122) forms the base plate (51) to support the fuel or the heating element.

In such a case, the receptacle (102) is supported on the ground by the lower edges of the front wall (120) and of the back wall (121).

## Claims

1. Barbecue (1) comprising:
- an internally hollow receptacle (2), which is provided with at least one sidewall (21), a cavity (C) laterally defined by the said sidewall (21), and an upper edge (B) that defines an upper opening (A) providing access to the said cavity (C); the said sidewall (21) of the receptacle (2) comprising an internal surface (21a) facing towards the said cavity (C), and an external surface (21b) facing outwards;
- at least one base plate (51, 510) disposed in the receptacle (2) inside the said cavity (C) to support fuel or a heating element;
- an openable grill (4) comprising a handle (41) and a border (42) in opposite position with respect to the said handle (41);
- support means (22, 21c) for the said grill (4); the said support means (22) being provided on the said receptacle (2) and supporting the grill (4) inside the cavity (C) in vertical position in proximity to the said at least one pocket (3);
said support means (22, 21c) comprising a notch (22), which is obtained on the sidewall (21) of the receptacle (2) and ends on the upper opening (A) of the receptacle (2); said notch (22) comprising a horizontal bottom edge (22a) whereon the said handle (41) of the said grill (4) is supported;
**characterized in that**
said support means (22, 21c) comprise also a portion (21c) of the internal surface (21a) of the sidewall (21) of the receptacle (2); said portion (21c) being disposed in diametrically opposite position with respect to the notch (22); said border (42) of the grill (4) being engaged against said portion (21c) of the internal surface (21a) of the sidewall (21) of the receptacle (2), and
said portion (21c) of the internal surface (21a) of the sidewall (21) of the receptacle (2) being integral part of the internal surface (21a) of the sidewall of the receptacle.

2. The barbecue (1) according to claim 1 wherein the heating element is a electrical resistance.

3. The barbecue (1) of claim 1 or 2, comprising two "L"-shaped frames (5; 50) in opposite specular position, disposed inside the cavity (C) of said receptacle (2); said two "L"-shaped frames (5; 50) defining a space (3a) inside which the grill (4) is disposed.

4. The barbecue of claim 3, wherein each "L"-shaped frame (5, 50) comprises:
- a base wall (51; 510) horizontally disposed to support the fuel loaded in the pocket (3);
- a sidewall (52; 520) disposed in vertical position inside the cavity (C) of the receptacle (2).

5. The barbecue (1) of claim 4, wherein the sidewall (52) of each "L"-shaped frame (5) comprises a series of vertical rods (52a) and a series of horizontal rods (52b) that connect the said vertical rods (52a) mutually in such manner to define openings (53) for transmitting the heat from the pocket (3) to towards the space (3a); each horizontal rod (52b) being provided with two free ends (52c) inserted in holes (F1) obtained on the sidewall (21) of the receptacle (2).

6. The barbecue (1) of claim 4 or 5, wherein the said base wall (51) of every "L"-shaped frame (5) comprises a plate provided with a curvilinear edge (51b) and a rectilinear edge (51a); the said curvilinear edge (51b) being in contact with the internal surface (21a) of the sidewall (21) of the receptacle (2) and the said rectilinear edge (51a) being stopped against the said sidewall (52) of the "L"-shaped frame (5).

7. The barbecue (1) of claim 6, wherein the said rectilinear edge (51a) of the base wall (51) of each "L"-shaped frame (5) is bent as a "U" and is interposed between two side-by-side horizontal rods (52b) of the sidewall (52) of the "L"-shaped frame (5).

8. The barbecue (1) of any one of claims 4 to 7, comprising support means (7) for supporting the said sidewall (52) of each"L"-shaped frame (5); the said support means (7) comprising at least one spring (7), comprising a semicircular central section (70) and two ending sections (71) in opposite facing position, the said semicircular central section (70) of the said at least one spring (7) being engaged against the internal surface (21a) of the sidewall (21) of the receptacle (2); the said two ending sections (71) of the said at least one spring (7) being stopped against the sidewall (52) of the "L"-shaped frame (5), in such manner to push the said sidewall (52) of the "L"-shaped frame (5) towards the inside of the receptacle (2).

9. The barbecue (1) of claim 8, wherein each ending section (71) of each spring (7) comprises a rectilinear portion (71a) and a U-shaped curvilinear portion (71b) defining a seat (71c) that receives one of the vertical rods (52a) of the sidewall (52) of each "L"-shaped frame (5).

10. The barbecue (1) of claim 8 or 9, wherein the said receptacle (2) comprises at least one seat (6) that houses the semicircular central section (70) of the said at least one spring (7); the said at least one seat (6) comprising at least one perimeter groove (6) obtained on the internal surface (21a) of the sidewall (21) of the receptacle (2).

11. The barbecue (1) of any one of claims 4 to 10, wherein the base wall (51) of each "L"-shaped frame (5) comprises a tab (8) inserted in a slot (80) obtained on the sidewall (21) of the receptacle (2).

12. The barbecue (1) of claim 4, wherein each "L"-shaped frame (50) comprises a perforated L-bent metal sheet (5) that comprises a perforated base wall (510) disposed in horizontal position to support the fuel loaded in the pocket (3) and a sidewall (520) disposed in vertical position inside the cavity (C) of the receptacle (2) and provided with a plurality of holes (F) for transmitting the heat from the pocket (3) to the space (3a).

13. The barbecue of any one of the preceding claims, wherein the said receptacle (2) is cylindrical.

14. The barbecue of claim 1 or 2, wherein the said receptacle (102) has a parallelepiped shape, with a front wall (120) provided with the notch (22), a back wall (121) and two opposite sidewalls (122); each sidewall (122) being provided with a lower portion bent at 90° towards the interior of the receptacle in such manner to form the base plate (51) to support the fuel or the heating element.

15. The barbecue of claim 14, wherein the front wall (120) and the back wall (121) of the receptacle (102) comprise lower edges intended to rest on the ground to support the receptacle (102).

## Patentansprüche

1. Grill (1), umfassend:
- einen inwendig hohlen Behälter (2), der wenigstens eine Seitenwand (21), einen seitlich durch die Seitenwand (21) definierten Hohlraum (C) und eine Oberkante (B) aufweist, die eine obere Zugangsöffnung (21) für den Zugang zu dem Hohlraum (C) definiert; wobei die Seitenwand (21) des Behälters (2) einen Innenfläche (21a) umfasst, die zu dem Hohlraum (C) gerichtet ist, und einen Außenfläche (21b), die nach außen gerichtet ist;
- wenigstens eine Basisplatte (51, 510), die in dem Behälter (2) im Inneren des Hohlraums (C) angeordnet ist, um Brennstoff oder ein Heizelement zu tragen;
- einen zu öffnenden Rost (4), umfassend einen Griff (41) und eine dem Griff (41) gegenüberliegende Kante (42);
- Stützmittel (22, 21c) für den Rost (4); wobei die Stützmittel (22) auf dem Behälter (2) vorgesehen sind und den Rost (4) im Inneren des Hohlraums (C) in senkrechter Stellung in der Nähe von wenigstens einer Tasche (3) halten;
wobei die Stützmittel (22, 21c) einen Schlitz (22) umfassen, der aus der Seitenwand (21) des Behälters (2) herausgearbeitet ist und in die obere Öffnung (A) des Behälters (2) einmündet; wobei der Schlitz (22) eine horizontale Bodenkante (22a) umfasst, auf der der Griff (41) des Rosts (4) aufliegt;
**dadurch gekennzeichnet, dass**
die Stützmittel (22, 21c) ferner einen Abschnitt (21c) der Innenfläche (21a) der Seitenwand (21) des Behälters (2) umfassen; wobei der Abschnitt (21c) dem Schlitz (22) diametral gegenüberliegt; wobei die Kante (42) des Rosts (4) an dem Abschnitt (21c) der Innenfläche (21a) der Seitenwand (21) des Behälters (2) zur Anlage kommt, und
der Abschnitt (21c) der Innenfläche (21a) der Seitenwand (21) des Behälters (2) ein Bestandteil der Innenfläche (21a) der Seitenwand des Behälters ist.

2. Grill (1) nach Anspruch 1, wobei das Heizelement ein elektrischer Widerstand ist.

3. Grill (1) nach Anspruch 1 oder 2, umfassend zwei L-förmige, sich spiegelbildlich gegenüberliegende Rahmen (5; 50), die im Inneren des Hohlraums (C) des Behälters (2) angeordnet sind; wobei die beiden L-förmigen Rahmen (5; 50) einen Zwischenraum (3a) definieren, in dem der Rost (4) angeordnet ist.

4. Grill nach Anspruch 3, wobei der L-förmige Rahmen (5, 50) Folgendes umfasst:
- eine Basiswand (51; 510), die horizontal angeordnet ist, um den in die Tasche (3) eingefüllten Brennstoff zu tragen;
- eine Seitenwand (52; 520), die vertikal in dem Hohlraum (C) des Behälters (2) angeordnet ist.

5. Grill (1) nach Anspruch 4, wobei die Seitenwand (52) eines jeden L-förmigen Rahmens (5) eine Reihe von vertikalen Rundstäben (52a) und eine Reihe von horizontalen Rundstäben (52b) umfasst, die die vertikalen Rundstäbe (52a) miteinander verbinden, derart, dass Öffnungen (53) für den Durchgang der Wärme aus der Tasche (3) zum Zwischenraum (3a) definiert sind; wobei jeder horizontale Rundstab (52b) zwei freie Enden (52c) aufweist, die in Bohrungen (F1) eingesetzt sind, die auf der Seitenwand (21) des Behälters (2) herausgearbeitet sind.

6. Grill (1) nach Anspruch 4 oder 5, wobei die Basiswand (51) eines jeden L-förmigen Rahmens (5) eine Platte mit einem krummlinigen Rand (51b) und einem geradlinigen Rand (51a) umfasst; wobei der krummlinige Rand (51b) sich mit der Innenfläche (21a) der Seitenwand (21) des Behälters (2) in Kontakt befindet und wobei der geradlinie Rand (51a) gegen die Seitenwand (52) des L-förmigen Rahmens (5) in Anschlag geht.

7. Grill (1) nach Anspruch 6, wobei der geradlinige Rand (51a) der Basiswand (51) eines jeden L-förmigen Rahmens (5) zu einem "U" gebogen und zwischen zwei nebeneinanderliegenden, horizontalen Rundstäben (52b) der Seitenwand (52) des L-förmigen Rahmens (5) angeordnet ist.

8. Grill (1) nach einem der Ansprüche 4 bis 7, umfassend zwei Stützmittel (7) zum Stützen der Seitenwand (52) eines jeden L-förmigen Rahmens (5); wobei die Stützmittel (7) wenigstens eine Feder (7) umfassen, welche einen mittleren halbkreisförmigen Abschnitt (70) und zwei Endabschnitte (71) umfasst, die gegenüberliegend und einander zugewandt angeordnet sind; wobei der mittlere halbkreisförmige Abschnitt (70) der wenigstens einen Feder (7) an der Innenfläche (21a) der Seitenwand (21) des Behälters (2) in Eingriff steht; wobei die beiden Endabschnitte (71) der wenigstens einen Feder (7) gegen die Seitenwand (52) des L-förmigen Rahmens (5) in Anschlag gehen, derart, dass die Seitenwand (52) des L-förmigen Rahmens (5) zum das Inneren des Behälters (2) hin gedrückt wird.

9. Grill (1) nach Anspruch 8, wobei jeder Endabschnitt (71) einer jeden Feder (7) einen geradlinigen Abschnitt (71a) und einen krummlinigen Abschnitt (71b) umfasst, der zu einem "U" gebogen ist und einen Sitz (71c) definiert, der einen der vertikalen Rundstäbe (52a) der Seitenwand (52) eines jeden L-förmigen Rahmens (5) aufnimmt.

10. Grill (1) nach Anspruch 8 oder 9, wobei der Behälter (2) wenigstens einen Sitz (6) umfasst, der den mittleren halbkreisförmigen Abschnitt (70) der wenigstens einen Feder (7) aufnimmt; wobei der wenigstens eine Sitz (6) wenigstens eine umlaufende Nut (6) umfasst, die auf der Innenfläche (21a) der Seitenwand (21) des Behälters (2) herausgearbeitet ist.

11. Grill (1) nach einem der Ansprüche 4 bis 10, wobei die Basiswand (51) eine jeden L-förmigen Rahmens (5) eine Zunge (8) umfasst, die in einen Schlitz (80) gesteckt ist, der auf der Seitenwand (21) des Behälters (2) herausgearbeitet ist.

12. Grill (1) nach Anspruch 4, wobei jeder L-förmige Rahmens (50) ein L-förmig gebogenes Lochblech (5) umfasst, das eine gelochte Basiswand (510) umfasst, die horizontal angeordnet ist, um den in der Tasche (3) eingefüllten Brennstoff zu tragen, und eine Seitenwand (520), die vertikal in dem Hohlraum (C) des Behälters (2) angeordnet ist und eine Mehrzahl von Löchern (F) für den Durchgang der Wärme aus der Tasche (3) zum Zwischenraum (3a) aufweist.

13. Grill (1) nach einem der vorstehenden Ansprüche, wobei der Behälter (2) zylindrisch ist.

14. Grill (1) nach Anspruch 1 oder 2, wobei der Behälter (102) die Form eine Parallelepipeds aufweist, mit einer Vorderwand (120), in der ein Einschnitt (22) herausgearbeitet ist, einer Hinterwand (121) und zwei gegenüberliegenden Seitenwänden (122); wobei jede Seitenwand (122) einen um 90° ins Innere des Behälters gebogenen, unteren Abschnitt aufweist, derart, dass die Basisplatte (51) zum Tragen des Brennstoffs oder des Heizelements gebildet wird.

15. Grill (1) nach Anspruch 14, wobei die Vorderwand (120) und die Hinterwand (121) des Behälters (102) untere Kanten umfassen, die dazu bestimmt sind, auf dem Boden aufzuliegen, um den Behälter (102) zu tragen.

## Revendications

1. Barbecue (1) comprenant :
- un réceptacle creux à l'intérieur (2), qui présente au moins une paroi latérale (21), une cavité (C) délimitée latéralement par ladite paroi latérale (21), et un bord supérieur (B) qui délimite une ouverture supérieure (A) d'accès à ladite cavité (C) ; ladite paroi latérale (21) du réceptacle (2) comprenant une surface interne (21a) orientée vers ladite cavité (C), et une surface externe (21b), orientée vers l'extérieur ;
- au moins une plaque de base (51, 510) disposée dans le réceptacle (2), à l'intérieur de ladite cavité (C), pour supporter du combustible ou un élément chauffant ;
- une grille (4) ouvrable comprenant un manche (41) et un bord (42) opposé par rapport au dit manche (41) ;
- des moyens de support (22, 21c) pour ladite grille (4) ; dits moyens de support (22) étant prévus sur ledit réceptacle (2) et supportant la grille (4) à l'intérieur de la cavité (C) en assiette verticale et rapprochée à ladite au moins une poche (3) ;
dits moyens de support (22, 21c) comprenant une encoche (22), réalisée sur la paroi latérale (21) du réceptacle (2) et qui débouche sur l'ouverture supérieure (A) du réceptacle (2) ; ladite encoche (22) comprenant un bord horizontal de fond (22a) sur lequel est appuyé ledit manche (41) de ladite grille (4) ;
**caractérisé en ce que**
lesdits moyens de support (22, 21c) comprennent également une portion (21c) de la surface interne (21a) de la paroi latérale (21) du réceptacle (2) ; ladite portion (21c) étant diamétralement opposée par rapport à l'encoche (22) ; ledit bord (42) de la grille (4) étant en butée contre ladite portion (21c) de la surface interne (21a) de la paroi latérale (21) du réceptacle (2), et
ladite portion (21c) de la surface interne (21a) de la paroi latérale du réceptacle (2) faisant partie intégrante de la surface interne (21a) de la paroi latérale du réceptacle.

2. Barbecue (1) selon la revendication 1, où l'élément chauffant est une résistance électrique.

3. Barbecue (1) selon la revendication 1 ou 2, comprenant deux châssis en « L » (5; 50) en position spéculaire opposée, disposés à l'intérieur de la cavité (C) du dit réceptacle (2) ; lesdits deux châssis en « L » (5; 50) délimitant un espace (3a) dans lequel la grille est placée (4).

4. Barbecue selon la revendication 3, où chaque châssis en « L » (5, 50) comprend :
- une paroi de base (51; 510), disposée horizontalement pour supporter le combustible introduit dans la poche (3) ;
- une paroi latérale (52; 520), disposée verticalement dans la cavité (C) du réceptacle (2).

5. Barbecue (1) selon la revendication 4, où la paroi latérale (52) de chaque châssis en « L » (5) comprend une série de ronds de fer verticaux (52a) et une série de ronds de fer horizontaux (52b) qui relient entre eux lesdits ronds de fer verticaux (52a), de façon à délimiter des ouvertures (53) pour le passage de la chaleur de la poche (3) vers l'espace (3a) ; chaque rond de fer horizontal (52b) présentant deux extrémités libres (52c) introduites dans des orifices (F1) réalisés sur la paroi latérale (21) du réceptacle (2).

6. Barbecue (1) selon la revendication 4 ou 5, où ladite paroi de base (51) de chaque châssis en « L » (5) comprend une plaque ayant un bord curviligne (51b) et un bord rectiligne (51a) ; ledit bord curviligne (51b) étant en contact avec la surface interne (21a) de la paroi latérale (21) du réceptacle (2) et ledit bord rectiligne (51a) étant en butée contre ladite paroi latérale (52) du châssis en « L » (5).

7. Barbecue (1) selon la revendication 6, où ledit bord rectiligne (51a) de la paroi de base (51) de chaque châssis en « L » (5) est replié en « U » et est interposé entre deux ronds de fer horizontaux juxtaposés (52b) de la paroi latérale (52) du châssis en « L » (5).

8. Barbecue (1) selon l'une quelconque des revendications de 4 à 7, comprenant des moyens de support (7) pour le support de ladite paroi latérale (52) de chaque châssis en « L » (5) ; lesdits moyens de support (7) comprenant au moins un ressort (7), comprenant un segment central semi-circulaire (70) et deux segments d'extrémité (71), opposés et orientés l'un vers l'autre ; ledit segment central semi-circulaire (70) de dit au moins un ressort (7) étant en butée contre la surface interne (21a) de la paroi latérale (21) du réceptacle (2) ; lesdits deux segments d'extrémité (71) de dit au moins un ressort (7) étant en butée contre la paroi latérale (52) du châssis en « L » (5), de façon à pousser ladite paroi latérale (52) du châssis en « L » (5) vers l'intérieur du réceptacle (2).

9. Barbecue (1) selon la revendication 8, où chaque segment d'extrémité (71) de chaque ressort (7) comprend une portion rectiligne (71a) et une portion curviligne (71b) en forme de « U » qui définit un emplacement (71c) qui accueille l'un des ronds de fer verticaux (52a) de la paroi latérale (52) de chaque châssis en « L » (5).

10. Barbecue (1) selon la revendication 8 ou 9, où ledit réceptacle (2) comprend au moins un emplacement (6) qui loge le segment central semi-circulaire (70) de dit au moins un ressort (7) ; dit au moins un emplacement (6) comprenant au moins une gorge périphérique (6) réalisée sur la surface interne (21a) de la paroi latérale (21) du réceptacle (2).

11. Barbecue (1) selon l'une quelconque des revendications de 4 à 10, où la paroi de base (51) de chaque châssis en « L » (5) comprend une languette (8) enfilée dans une fissure (80) réalisée sur la paroi latérale (21) du réceptacle (2).

12. Barbecue (1) selon la revendication 4, où chaque châssis en « L » (50) comprend une tôle percée (5), pliée en « L », comprenant une paroi de base (510) percée, disposée horizontalement pour supporter le combustible introduit dans la poche (3), et une paroi latérale (520), qui est disposée verticalement dans la cavité (C) du réceptacle (2) et qui présente une pluralité de perforations (F) pour le passage de la chaleur depuis la poche (3) vers l'espace (3a).

13. Barbecue selon l'une quelconque des revendications précédentes, où ledit réceptacle (2) est cylindrique.

14. Barbecue selon la revendication 1 ou 2, où ledit réceptacle (102) a une forme parallélépipède, avec une paroi antérieure (120) où l'encoche (22) est réalisée, une paroi postérieure (121) et deux parois latérales (122) opposées; chaque paroi latérale (122) présentant une portion inférieure pliée à 90° vers l'intérieur du réceptacle de manière à former la plaque de base (51) pour supporter le combustible ou l'élément chauffant.

15. Barbecue selon la revendication 14, où la paroi antérieure (120) et la paroi postérieure (121) du réceptacle (102) comprennent des bords inférieurs destinés à s'appuyer au sol pour supporter le réceptacle (102).
